# EUROPÄISCHE PATENTSCHRIFT

(11) **EP 1 585 644 B1**
(45) Veröffentlichungstag und Bekanntmachung des Hinweises auf die Patenterteilung: **24.08.2011**
(21) Anmeldenummer: 03795748.7
(22) Anmeldetag: 19.12.2003
(51) Int. Cl.: B60J 7/14

(54) **CABRIOLET-FAHRZEUG**
CABRIOLET VEHICLE
VEHICULE CABRIOLET

(30) Priorität: 09.01.2003 DE 10300342
(43) Veröffentlichungstag der Anmeldung: 19.10.2005
(73) Patentinhaber: Wilhelm Karmann GmbH, 49084 Osnabrück (DE)
(72) Erfinder: EICHHOLZ, Stefan, 49163 Bohmte (DE); THEUERKAUF, Jürgen, 49565 Bramsche (DE)
(74) Vertreter: Kronthaler, Schmidt & Coll.
(86) Internationale Anmeldenummer: PCT/DE2003/004118
(87) Internationale Veröffentlichungsnummer: WO 2004/062951

(56) Entgegenhaltungen:
- EP-A- 1 074 415
- EP-A- 1 112 879
- DE-C- 10 159 390

## Beschreibung

Die Erfindung betrifft ein Cabriolet-Fahrzeug mit einem zumindest zwei separat gelagerte Bewegungseinheiten umfassenden Dach nach dem Oberbegriff des Anspruchs 1.

Es sind im Stand der Technik zahlreiche Lösungen bekannt, bei denen das Dach insgesamt eine einzige, an jeweils einem seitlichen Hauptlager gehaltene Bewegungseinheit ausbildet. Insbesondere bei einem Dach mit mehreren Dachteilen müssen dann die einzelnen Teile dieses Daches beim Öffnen gegeneinander gefaltet werden, wozu Beschläge zwischen den Dachteilen vorgesehen sind. Diese ragen jedoch, insbesondere bei sportlichen Fahrzeugen, in den Bewegungsbereich der Köpfe der Insassen hinein. Zudem weist die eine Bewegungseinheit ein hohes Gewicht auf, was große Antriebe zu ihrer Bewegung erfordert, die zusätzlichen Bauraum beanspruchen. Beim Öffnen müssen die Bewegungsabläufe des Daches insgesamt und der Relativbewegung der Dachteile zueinander zumindest teilweise zeitlich nacheinander stattfinden, was die Öffnungszeit verlängert.

Daher kann es wünschenswert sein, ein Dach mit mehreren voneinander getrennt gelagerten Bewegungseinheiten vorzusehen. Die EP 1 074 415 A2 zeigt ein solches Cabriolet-Fahrzeug mit zwei separat gelagerten Bewegungseinheiten, wobei die hintere Bewegungseinheit ein starres Dachteil mit einer Heckscheibe und die vordere Bewegungseinheit zwei ineinander schachtelbare starre Dachteile umfaßt. Die Bewegungseinheiten sind über eine Koppelstange miteinander zwangssynchronisiert. Die hintere Bewegungseinheit ist an ihrem Hauptlager über einen Lenker mit einem Rotationsfreiheitsgrad schwenkbar gehalten, wodurch das dieser zugeordnete starre Dachteil in Über-Kopf-Lage und sehr weit hinten im Fahrzeugheck abgelegt werden muß. Dadurch wird der verbleibende Gepäckraum erheblich eingeschränkt.

Die WO 03/01388 A1 zeigt ein Cabriolet-Fahrzeug mit mehreren festen Dachteilen, von denen das hinterste in im wesentlichen gleichbleibender Orientierung ablegbar und ein davor gelegenes Dachteil bei der Öffnungsbewegung darunter einschachtelbar ist. Das hintere Dachteil ist hierfür über Gelenkkinematiken mit karosserieseitigen Lagern verbunden. Diese Gelenkinematiken, die auch lineare Anteile enthalten können, sind in ihrem Aufbau kompliziert und in der genannten Schrift nur in ihrer Wirkung zu erkennen.

Der Erfindung liegt das Problem zugrunde, bei einem gattungsgemäßen Cabriolet-Fahrzeug mit mehreren separaten Bewegungseinheiten des Daches die Öffnungskinematik zu verbessern.

Die Erfindung löst dieses Problem durch ein Cabriolet-Fahrzeug mit den Merkmalen des Anspruchs 1 sowie durch ein Dach mit den Merkmalen des Anspruchs 10. Hinsichtlich vorteilhafter Ausgestaltungen der Erfindung wird auf die weiteren Ansprüche 2 bis 9 verwiesen.

Erfindungsgemäß ist durch die unterschiedlichen Funktionen der Teile der Gelenkkette gleichzeitig und auf den Bewegungsablauf optimiert eine Überlagerung einer Gesamtbewegung der jeweiligen Bewegungseinheit und eine Lageänderung des hinteren Dachteils relativ zu weiteren Dachteilen möglich. Damit kann die Öffnungsoder Schließbewegung des Daches beschleunigt werden. Die Gesamt- und Relativbewegungen können gleichzeitig ablaufen. Die Teile der Gelenkkette können dabei auch während eines Teils oder der gesamten Öffnungsbewegung gegensinnig bewegt werden, so daß eine beliebige Bewegungskurve etwa der Vorderkante des von der Gelenkkette gehaltenen starren Dachteils möglich wird.

Zudem können das hintere und ein weiter vorne liegendes Dachteil auch in der Bewegung sehr eng aneinander vorbeigeführt werden, ohne daß Kollisionsgefahr zwischen diesen besteht.

Damit ist etwa auch eine Ablage des hinteren starren Dachteils in einer Orientierung, bei der die im geschlossenen Zustand nach außen weisende Seite des hinteren starren Dachteils ebenfalls nach oben weist, möglich. Aufgrund der Wölbung der Heckscheibe verbleibt dann darunter ein vergrößerter Gepäckraum. Durch die Gelenkkette kann zudem bei der Öffnungsbewegung das hintere starre Dachteil gegenüber einer reinen Schwenkbewegung weiter in Fahrtrichtung nach vorne verlagert werden, wodurch ebenfalls der Gepäckraum vergrößert ist.

Hier sind weiter die einzelnen Teile der Gelenkkette über diesen jeweils zugeordnete Koppelglieder an eine Bewegungseinheit für ein oder mehrere weiter vorne liegende Dachteil(e) angekoppelt. Eine Fehlfunktion ist dadurch ausgeschlossen. Der mechanische Aufbau ist vereinfacht.

In Ablagestellung ist eine Schachtelung der Dachteile in gleichsinniger Orientierung möglich und führt zu einer dichten Packung der Teile, die wenig Raum beansprucht.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: ein erfindungsgemäßes Cabriolet-Fahrzeug mit zwei festen Dachteilen in perspektivischer Gesamtansicht bei geschlossenem Dach,
- Fig. 2: ein Dach und eine abgebrochen dargestellte Karosserie eines ersten Ausführungsbeispiels eines erfindungs- gemäßen Cabriolet-Fahrzeugs in schematischer Seiten- ansicht im geschlossenen Zustand des Daches,
- Fig. 3: das Dach nach Fig. 2 während seiner beginnenden Öffnung,
- Fig. 4: das Dach nach Fig. 3 bei weiter fortschreitender Öffnung,
- Fig. 5: das Dach nach Fig. 4 in nahezu geöffnetem Zustand,
- Fig. 6: das Dach nach Fig. 5 in vollständig geöffnetem Zustand,
- Fig. 7 - Fig. 12: ein zweites Ausführungsbeispiel eines Daches in schematischer Darstellung, darin

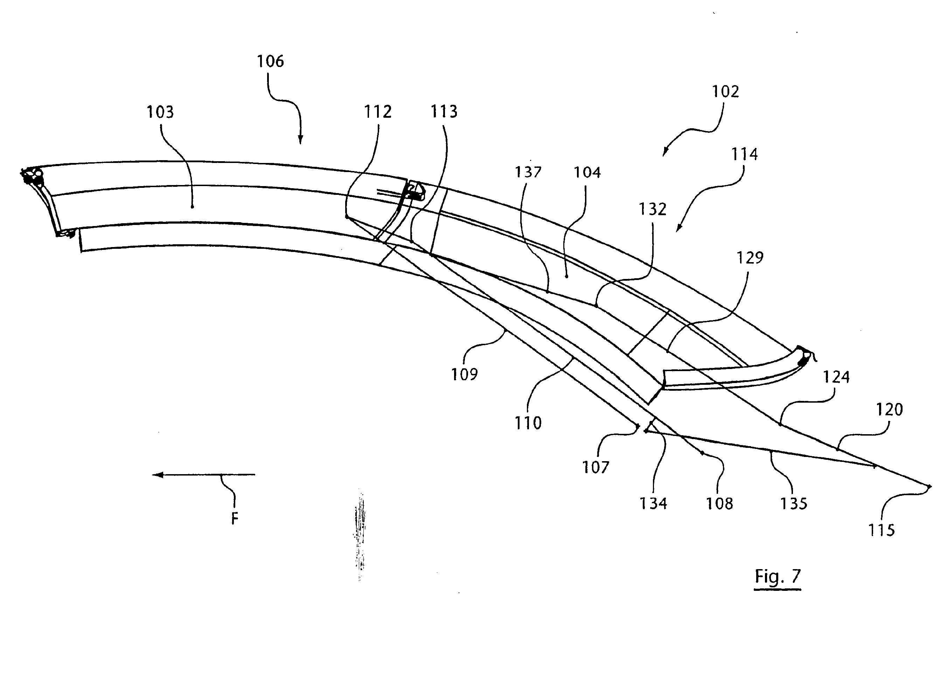

- Fig. 7: das Dach in geschlossenem Zustand,

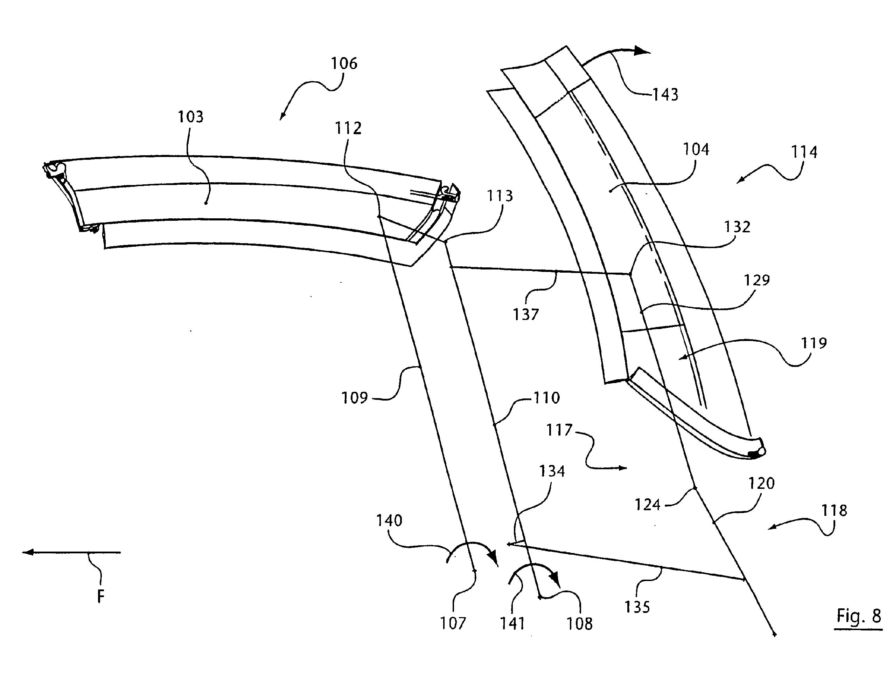

- Fig. 8: das Dach bei beginnender Öffnung,

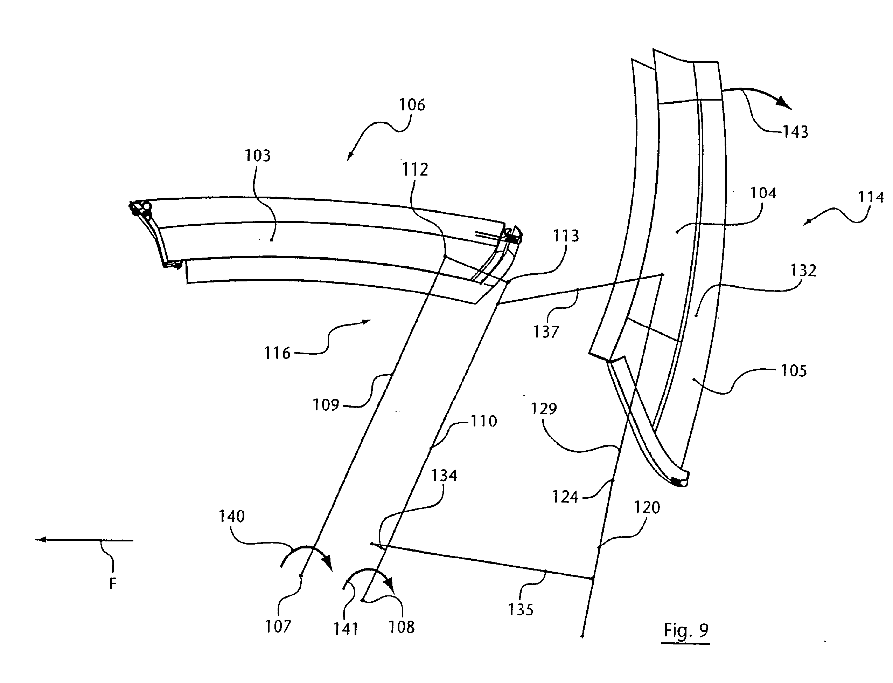

- Fig. 9: das Dach bei weiter fortschreitender Öffnung,

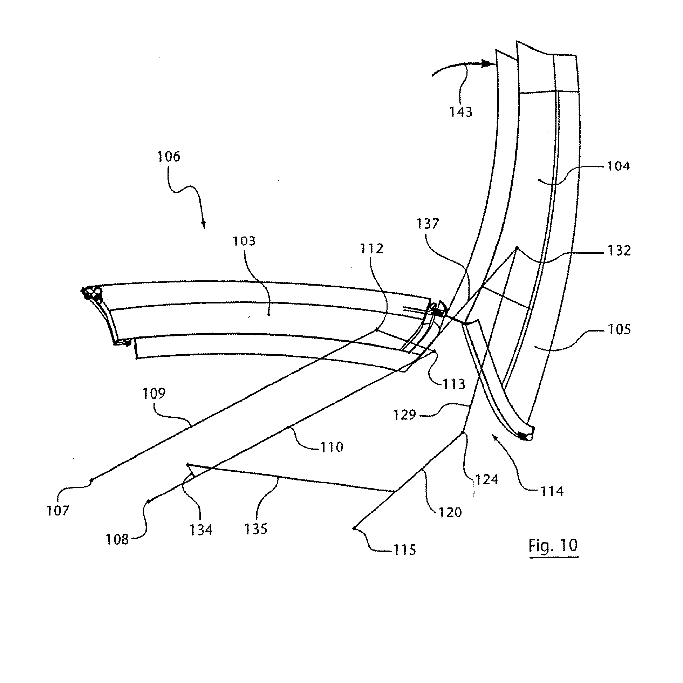

- Fig. 10: das Dach bei weiter fortschreitender Öffnung,

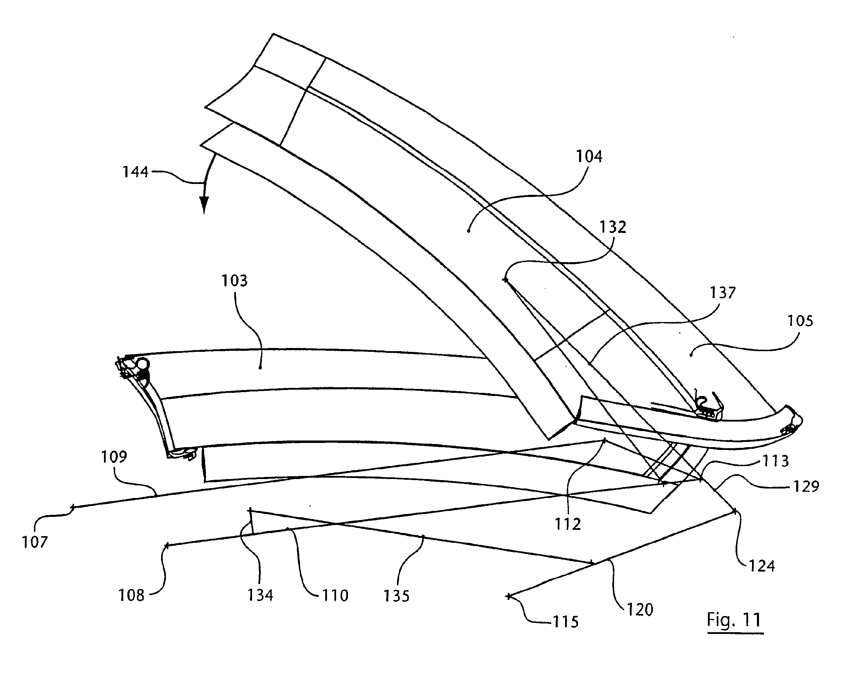

- Fig. 11: das Dach in Öffnungsstellung kurz vor Erreichen der endgültigen Ablagestellung,

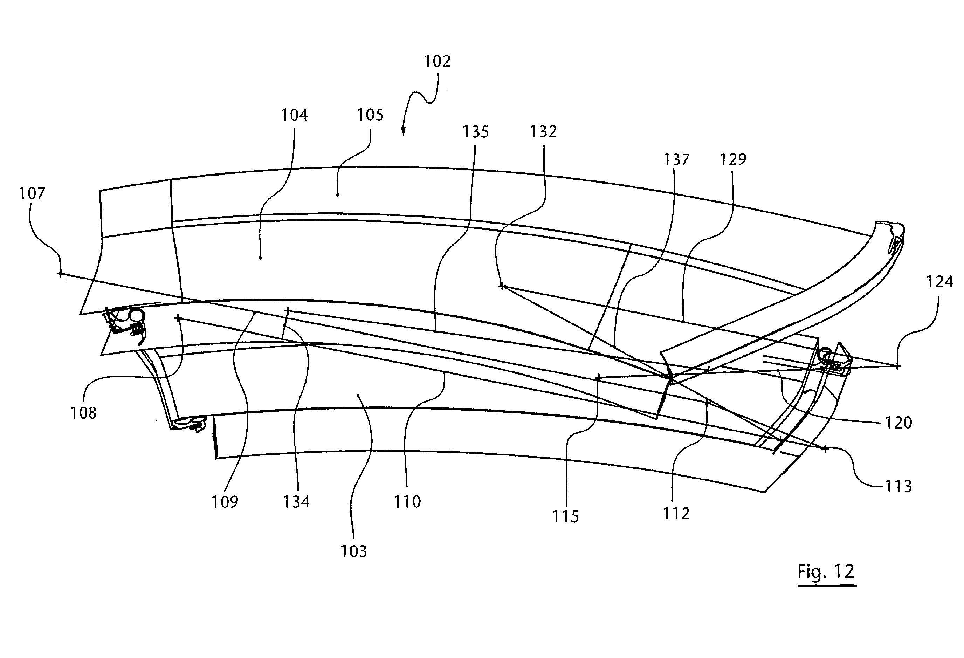

- Fig. 12: das Dach in vollständig abgelegter Stellung.

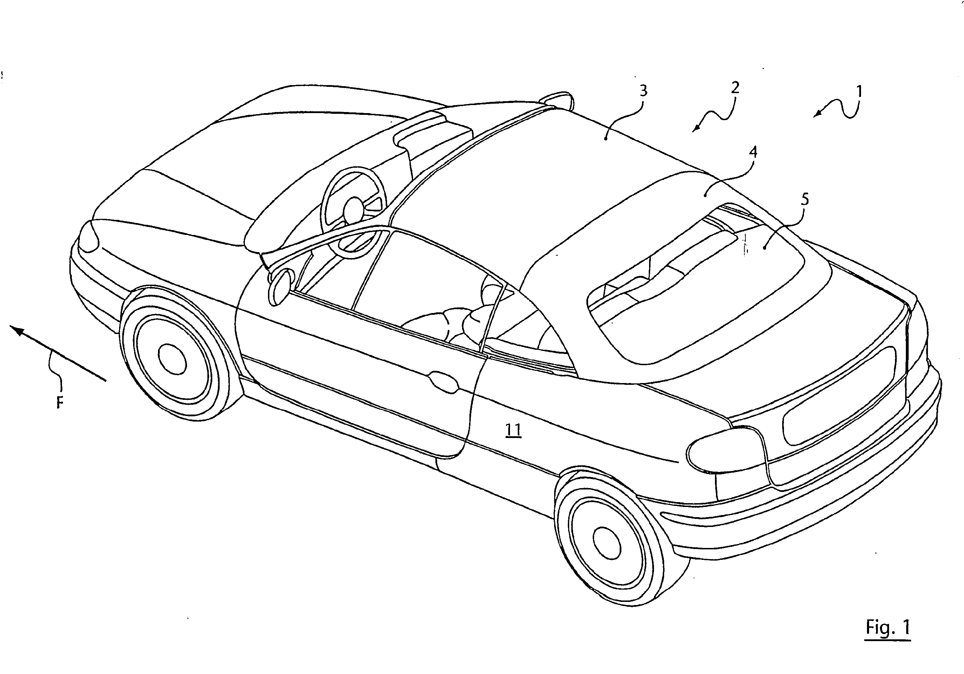

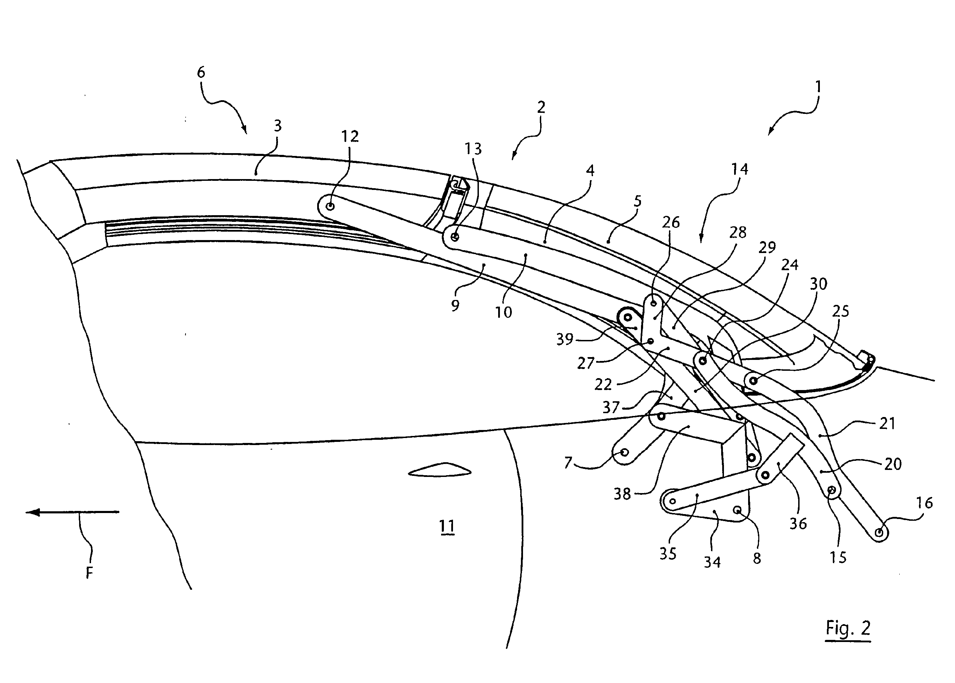

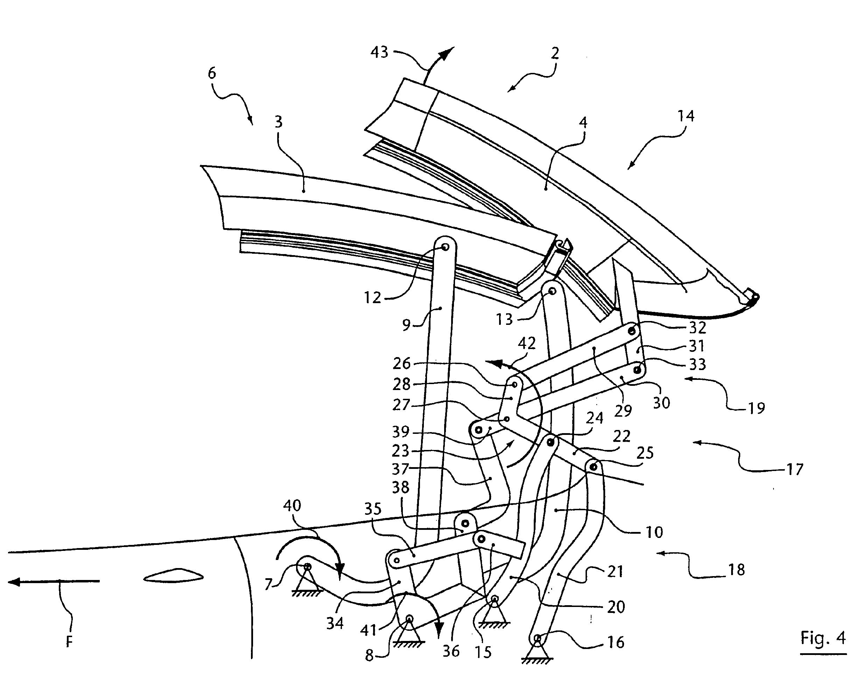

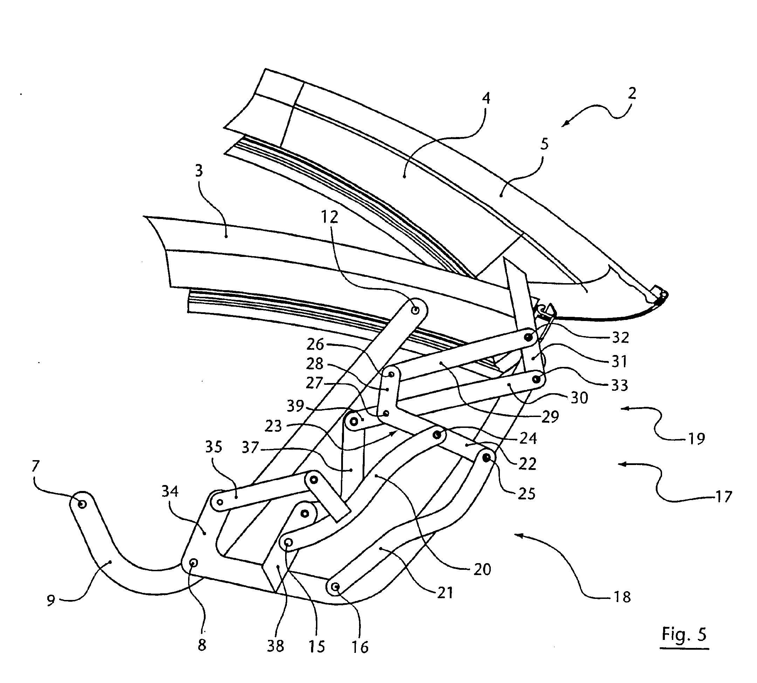

Das in den Figuren 1 bis 6 dargestellte Cabriolet-Fahrzeug 1 umfaßt ein Dach 2, das hier zwei im geschlossenen Zustand hintereinander liegende starre oder zumindest mit einem starren Rahmen versehene Dachteile 3, 4 umfaßt. Das hintere Dachteil 4 umfaßt eine Heckscheibe 5.

Das vordere Dachteil 3 ist Bestandteil einer ersten Bewegungseinheit 6, die an zwei in Fahrtrichtung F hintereinander und im Ausführungsbeispiel leicht höhenversetzt liegenden Lagerstellen 7, 8 über Lenker 9, 10 mit der Karosserie 11 schwenkbeweglich verbunden ist. Die Lenker 9, 10 greifen an ihren den Lagerstellen 7, 8 entgegengesetzten Enden über weitere Schwenkgelenke 12, 13 an dem vorderen Dachteil 3 an. Somit ist insgesamt über die Gelenke 7, 8, 12, 13 ein Viergelenk gebildet. Das Dachteil 3 kann - hier nicht gezeichnet - Träger eines weiteren, diesem vorgelagerten Dachteils sein, das mit dem Dachteil 3 verbunden ist und bei Dachöffnung über oder unter dieses - in gegensinniger oder insbesondere gleichsinniger Orientierung - verlagerbar ist.

Das hintere Dachteil 4 ist Bestandteil einer zweiten, separat an der Karosserie 11 gelagerten Bewegungseinheit 14. Diese hält über zwei wiederum hintereinander liegende karosseriefeste Schwenklager 15, 16 und eine daran abgestützte Gelenkkette 17 das Dachteil 4 beweglich gegenüber der Karosserie 11.

Die Gelenkkette 17 umfaßt einen ersten, unteren Teil 18, der an die Karosserie angebunden ist und daher zumindest die Bewegung der Bewegungseinheit 14 insgesamt bewirkt. Eine Winkeländerung der Lage des Dachteils 4 kann bereits durch diesen Teil 18 erfolgen. Die Gelenkkette 17 umfaßt weiterhin einen zweiten, oberen Teil 19, der die Winkelstellung des Dachteils 4, die durch den unteren Teil 18 eingestellt wird, überlagert und damit in gewünschter Weise optimiert.

Der untere Teil 18 umfaßt zwei an den Lagerstellen 15, 16 mit der Karosserie 11 verbundene Lenker 20, 21 sowie einen Langschenkel 22 eines L-förmigen Lenkers 23, an dem Lagerstellen 24, 25 der karosserieabgewandten Enden der Lenker 20, 21 liegen. Die Gelenke 15, 16 , 24, 25 bilden somit ein unteres Viergelenk aus.

Der obere Teil 19 umfaßt zwei an den Lagerstellen 26, 27 mit dem Kurzschenkel 28 des L-förmigen Lenkers 23 verbundene Lenker 29, 30 sowie einen mit dem starren Dachteil 4 fest verbundenen Hebel 31, an dem Lagerstellen 32, 33 der dem L-förmigen Lenker 23 abgewandten Enden der Lenker 29, 30 liegen. Die Gelenke 26, 27, 32, 33 bilden somit ein oberes Viergelenk aus.

Zur Kopplung des unteren Teils 18 der Bewegungseinheit 14 mit der vorderen Bewegungseinheit 6 ist eine erste Koppelstange 35 vorgesehen, die einenends mit einem Fortsatz 34 des Lenkers 10 der vorderen Bewegungseinheit 6 und anderenends mit einem Fortsatz 36 des Lenkers 20 der hinteren Bewegungseinheit 14 schwenkbeweglich verbunden ist.

Zur Kopplung des oberen Teils 19 der Bewegungseinheit 14 mit der vorderen Bewegungseinheit 6 ist eine zweite Koppelstange 37 vorgesehen, die einenends mit einem Fortsatz 38 desselben Lenkers 10 der vorderen Bewegungseinheit 6 und anderenends mit einer Verlängerung 39 des Lenkers 30 der hinteren Bewegungseinheit 14 schwenkbeweglich verbunden ist.

Zum Öffnen oder Schließen des Daches 2 genügt aufgrund der Kopplungsstangen 35, 37 nur ein Antrieb, der an einem der Lenker 9, 10, 20, 21 angreifen kann.

Beim Öffnen des Daches 2 wird durch den Antrieb, wenn er an einem der vorderen Lenker 9, 10 angreift, das Viergelenk 7, 8, 12, 13 der vorderen Bewegungseinheit 6 geöffnet, wobei die Lenker 9, 10 in Richtung der Pfeile 40, 41 nach hinten schwenken. Durch die Koppelstange 35 wird das den unteren Teil 18 der hinteren Bewegungseinheit 14 bildende Viergelenk 15, 16, 24, 25 gleichsinnig geöffnet, so daß beide starren Dachteile 3, 4 nach hinten und leicht abwärts verlagert werden.

Durch die zweite Koppelstange 37 wird gleichzeitig das den oberen Teil 19 der hinteren Bewegungseinheit 14 bildende Viergelenk 26,27,32,33 gegensinnig in Richtung des Pfeils 42 geöffnet, wodurch über Aufrichten des Hebels 31 das hintere Dachteil 4 in Richtung des Pfeils 43 aufwärts verschwenkt wird und somit die Kollisionsgefahr zwischen den Dachteilen 3 und 4 vermieden wird. Gleich zu Beginn der Öffnungsbewegung kann daher ein Ineinanderschachteln der Dachteile 3, 4 beginnen, wodurch die Öffnungs- und die Schließbewegung beschleunigt sind. Durch die gegensinnige Bewegung der beiden Teile 18, 19 der Gelenkkette sind daher schnelle und sehr präzise Dachbewegungen ermöglicht.

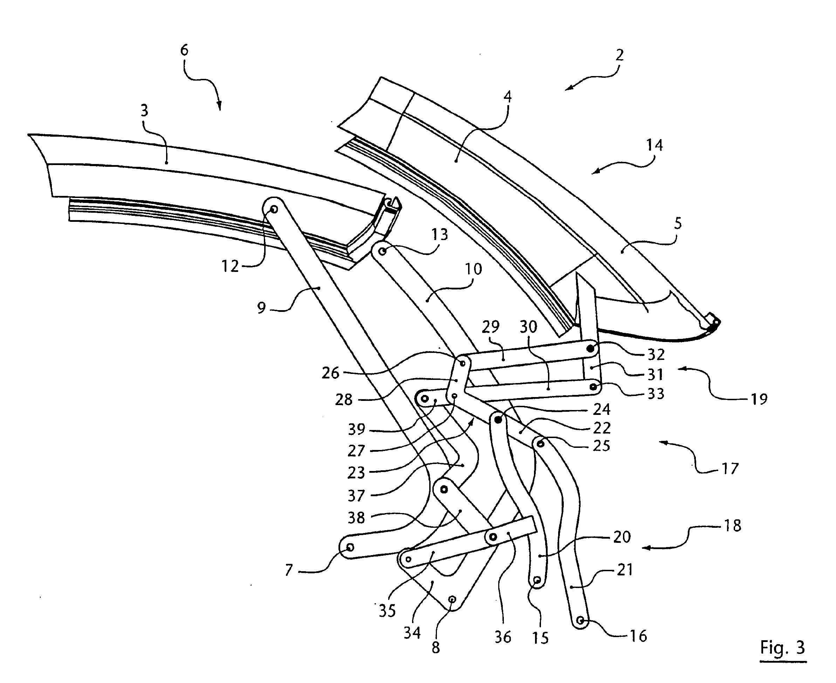

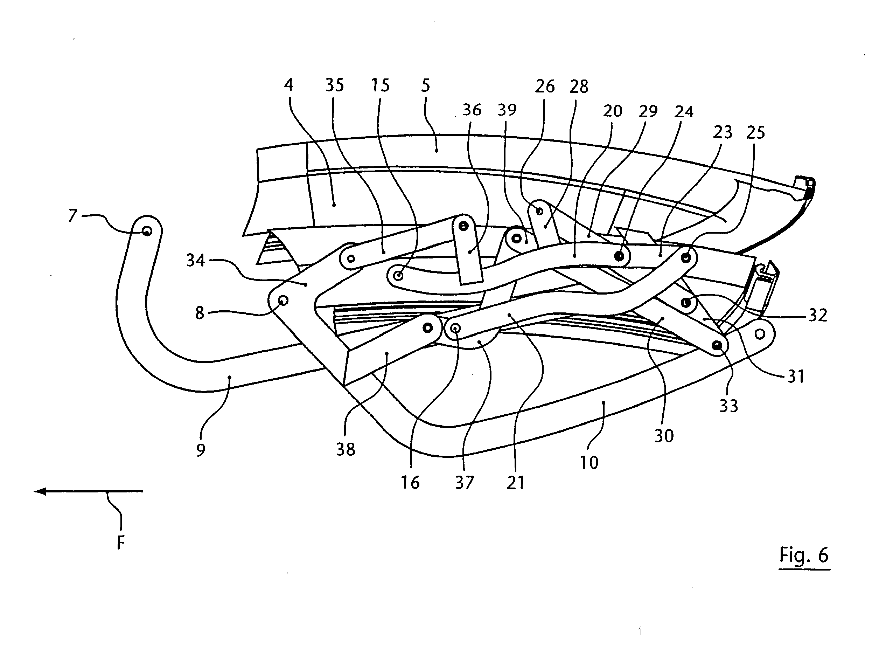

Dabei muß sich das hintere Dachteil 4 nicht besonders steil aufwärts bewegen, sondern es genügt eine geringe Winkelvergrößerung und eine geringes Gesamtanheben des Dachteils 4 gegenüber der Horizontalen, um die Kollisionsgefahr zu vermeiden. Ein Öffnen und Schließen des Daches ist somit auch in niedrigen Räumen, beispielsweise in Tiefgaragen, möglich. Bei der weiteren Öffnung (Übergang von Fig. 3 zu Fig. 6) legt sich das hintere Dachteil 4 derart ab, daß die Heckscheibe 5 mit ihrer Außenseite nach oben weist. Darunter ist dann das vordere Dachteil 3 in gleichsinniger Orientierung gehalten. Ein weiteres, an dem vorderen Dachteil 3 angehängtes Dachteil könnte ganz unten oder zwischen den beiden anderen gehalten sein.

In einem zweiten Ausführungsbeispiel (Figuren 7 bis 12) ist die vordere Bewegungseinheit 106 prinzipiell ähnlich zur Bewegungseinheit 6 des ersten Ausführungsbeispiels ausgebildet. Auch hier sind zwei hintereinander und leicht höhenversetzt liegende Lagerstellen 107, 108 für Lenker 109, 110 vorgesehen, über die das Dachteil 103 mit der Karosserie schwenkbeweglich verbunden ist. Die Lenker 109, 110 greifen an ihren den Lagerstellen 107, 108 entgegengesetzten Enden über weitere Schwenkgelenke 112, 113 an dem vorderen Dachteil 103 an. Somit ist auch hier über die Gelenke 107, 108, 112, 113 ein Viergelenk gebildet. Das Dachteil 103 kann wiederum Träger eines weiteren, diesem vorgelagerten Dachteils sein.

Das hintere Dachteil 104 ist Bestandteil einer zweiten, separat an der Karosserie gelagerten Bewegungseinheit 114, die hier allerdings wesentlich einfacher aufgebaut ist:
Sie enthält nur ein karosseriefestes Schwenklager 115 und eine daran abgestützte Gelenkkette 117, die das Dachteil 104 beweglich gegenüber der Karosserie hält.

Die Gelenkkette 117 umfaßt wiederum einen ersten, unteren Teil 118 und einen zweiten, oberen Teil 119 mit den oben angesprochenen Funktionen.

Der untere Teil 118 umfaßt jedoch im wesentlichen lediglich einen an der Lagerstelle 115 mit der Karosserie verbundenen Lenker 120, dessen karosserieabgewandtes Ende an einem Schwenklager 124 mit einem oberen, direkt fest mit dem Dachteil 104 verbundenen Lenker 129 gelenkig verbunden ist.

Der obere Teil 119 umfaßt diesen Lenker 129, der zwischen dem beweglichen Lager 124 und dem Dachteil 4 erstreckt ist und mit diesem fest verbunden ist.

Zur Kopplung des unteren Teils 118 der Bewegungseinheit 114 mit der vorderen Bewegungseinheit 106 ist eine erste Koppelstange 135 vorgesehen, die einenends mit einem Fortsatz 134 des Lenkers 110 der vorderen Bewegungseinheit 106 und anderenends direkt mit dem Lenker 120 der hinteren Bewegungseinheit 114 schwenkbeweglich verbunden ist.

Zur Kopplung des oberen Teils 119 der Bewegungseinheit 114 mit der vorderen Bewegungseinheit 106 ist eine zweite Koppelstange 137 vorgesehen, die einenends direkt mit demselben Lenker 110 der vorderen Bewegungseinheit 106 und anderenends direkt mit dem Lenker 129 am Gelenk 132 schwenkbeweglich verbunden ist.

Zum Öffnen oder Schließen des Daches 102 genügt wiederum nur ein Antrieb.

Beim Öffnen des Daches 102 wird durch den Antrieb, wenn er an einem der vorderen Lenker 109, 110 angreift, das Viergelenk 107, 108, 112, 113 der vorderen Bewegungseinheit 106 geöffnet, wobei die Lenker 109, 110 in Richtung der Pfeile 140, 141 nach hinten schwenken. Durch die Koppelstange 135 wird der den unteren Teil 118 der hinteren Bewegungseinheit 114 bildende Lenker 120 gleichsinnig geöffnet, so daß beide starre Dachteile 103, 104 nach hinten und leicht abwärts verlagert werden.

Durch die zweite Koppelstange 137 wird gleichzeitig der den oberen Teil 119 der hinteren Bewegungseinheit 114 bildende Lenker 129 zunächst während der Öffnungsphase zwischen den Figuren 6 und 10 gleichsinnig nach hinten verschwenkt, wodurch das hintere Dachteil 104 in Richtung des Pfeils 143 aufwärts verschwenkt wird und in Fig. 10 eine Extremstellung seines Öffnungswinkels erreicht, von der an das hintere Dachteil 104 gegensinnig in Richtung des Pfeils 144 schwenkt. Gleich zu Beginn der Öffnungsbewegung wird die Trennfuge zwischen den Teilen 103 und 104 sehr vergrößert, wodurch auch hier eine schnelle kollisionsfreie Öffnung möglich wird.

Ab der Extremstellung nach Figur 10 knickt das Gelenk 124 deutlich ein, so daß der Winkel zwischen dem Lenker 120 des unteren Teils 118 und dem Lenker 129 des oberen Teils 118 sehr verkleinert wird und sich die beiden Lenker 120, 129 in spitzem Winkel zueinander legen (Fig. 12). Dabei legt sich auch hier das hintere Dachteil 104 in Richtung des Pfeils 144 derart ab, daß die Heckscheibe 105 mit ihrer Außenseite nach oben weist. Darunter ist dann das vordere Dachteil 103 in gleichsinniger Orientierung gehalten. Ein weiteres, an dem vorderen Dachteil 103 angehängtes Dachteil könnte wie im ersten Ausführungsbeispiel gehalten sein.

Anstelle der gezeigten Ausführungsbeispiele sind auch andere Gelenkketten möglich, etwa auch ein Siebengelenk. Dabei kann bei entsprechender Ausbildung auch eine einzige mechanische Kopplung zur vorderen Bewegungseinheit hinreichend sein, um den oberen und unteren Teil der Gelenkkette separat zu bewegen.

## Patentansprüche

1. Cabriolet-Fahrzeug (1) mit einem zumindest zwei bewegliche Einheiten (6,14;106,114) umfassenden Dach (2;102), die jeweils an karosseriefesten Hauptlagern (7,8;15,16; 107,108;115) beweglich gehalten sind und denen jeweils zumindest ein starres Dachteil (3,4;103,104) zugeordnet ist,
**dadurch gekennzeichnet,**
**daß** zumindest ein hinteres, eine Heckscheibe (5;105) umfassendes starres Dachteil (4;104) über eine mehrteilige Gelenkkette (17;117) mit einem Hauptlager (15,16;115) verbunden ist, wobei ein Teil (18;118) der Gelenkkette (17; 117) zumindest eine Bewegung des starren Dachteils (4;104) bezüglich des Hauptlagers (15,16;115) und ein Teil (19;119) der Gelenkkette (17;117) zumindest eine Änderung der Winkelstellung des starren Dachteils (4;104) bewirkt und **dadurch** das hintere Dachteil (4;104) während der beginnenden Dachöffnung mit seiner vorderen Kante aufwärts (43) verschwenkbar und gleichzeitig ein vorderes Dachteil (3;103) im Sinne eines Ineinanderschachtelns der Dachteile (34;103,104) nach hinten bewegbar ist, wobei die Gelenkkette (17;117) zweiteilig (18,19;118,119) ist und die Bewegung der Teile (18,19;118,119) über zumindest ein Koppelglied (35,37;135,137) durch die Bewegung einer Bewegungseinheit (6;106) für zumindest ein weiteres starres Dachteil (3;103) bewirkbar ist.

2. Cabriolet-Fahrzeug nach Anspruch 1,
**dadurch gekennzeichnet,**
**daß** jeder Teil (18,19;118,119) der Gelenkkette (17;117) über jeweils ein Koppelglied (35,37;135,137) mit der Bewegungseinheit (6;106) für zumindest ein weiteres starres Dachteil (3;103) in Wirkverbindung steht.

3. Cabriolet-Fahrzeug nach einem der Ansprüche 1 oder 2,
**dadurch gekennzeichnet,**
**daß** die Gelenkkette (17) zwei miteinander verbundene Viergelenke umfaßt.

4. Cabriolet-Fahrzeug nach einem der Ansprüche 1 bis 3,
**dadurch gekennzeichnet.**
**daß** die Gelenkkette (17) ein Siebengelenk umfaßt.

5. Cabriolet-Fahrzeug nach einem der Ansprüche 1 bis 4,
**dadurch gekennzeichnet,**
**daß** genau zwei Bewegungseinheiten (6,14;106,114) vorgesehen sind, wobei die vordere (6;106) ein von einem Viergelenk (7,8,2,13;107,108,112,113) gebildetes Gelenkparallelogramm mit pro Fahrzeugseite zwei an der Fahrzeugkarosserie (11) gehaltenen Lenkern (9,10;109,110) umfaßt.

6. Cabriolet-Fahrzeug nach Anspruch 5,
**dadurch gekennzeichnet,**
**daß** das oder die Koppelglied(er) (35,37;135,137) durch mechanische Hebel gebildet sind, die an einem oder mehreren Lenkern (9,10;109,110) der vorderen Bewegungseinheit (6;106) angreifen.

7. Cabriolet-Fahrzeug nach einem der Ansprüche 1 bis 6,
**dadurch gekennzeichnet,**
**daß** jeder Bewegungseinheit (6,14;106,114) genau ein starres Dachteil (3,4;103,104) zugeordnet ist.

8. Cabriolet-Fahrzeug nach einem der Ansprüche 1 bis 7,
**dadurch gekennzeichnet.**
**daß** in Offenstellung des Daches (2;102) die hintere Bewegungseinheit (14;114) das hintere, die Heckscheibe (5;105) umfassende starre Dachteil (4;104) derart hält, daß die Heckscheibe (5;105) mit ihrer Außenseite nach oben weist.

9. Cabriolet-Fahrzeug nach Anspruch 8,
**dadurch gekennzeichnet.**
**daß** in Offenstellung unterhalb des hinteren starren Dachteils (4;104) ein vorderes Dachteil (3;103) in gleichsinniger Orientierung gehalten ist.

10. Dach (2;102) für ein Cabriolet-Fahrzeug (1) nach einem der Ansprüche 1 bis 9, wobei das Dach (2;102) zumindest zwei bewegliche Einheiten (6,14;106,114) umfaßt, die in ihrer Einbaustellung im Fahrzeug jeweils an karosseriefesten Hauptlagern (7,8;15.16;107,108;115) beweglich gehalten sind,
**dadurch gekennzeichnet.**
**daß** zumindest ein in Einbaustellung hinteres, eine Heckscheibe (5;105) umfassendes starres Dachteil (4;104) über eine mehrteilige Gelenkkette (17;117) mit einem Hauptlager (15,16;115) verbindbar ist, wobei ein Teil (18;118) der Gelenkkette (17;117) zumindest eine Bewegung des starren Dachteils (4;104) bezüglich des Hauptlagers (15,16;115) und ein Teil (19;119) der Gelenkkette (17;117) zumindest eine Änderung der Winkelstellung des starren Dachteils (4;104) bewirkt und **dadurch** das hintere Dachteil (4;104) während der beginnenden Dachöffnung mit seiner vorderen Kante aufwärts (43) verschwenkbar und gleichzeitig ein vorderes Dachteil (3;103) im Sinne eines Ineinanderschachtelns der Dachteile (34; 103,104) nach hinten bewegbar ist, wobei die Gelenkkette (17;117) zweiteilig (18,19;118,119) ist und die Bewegung der Teile (18,19;118,119) über zumindest ein Koppelglied (35,37;135,137) durch die Bewegung einer Bewegungseinheit (6;106) für zumindest ein weiteres starres Dachteil (3;103) bewirkbar ist.

## Claims

1. A convertible vehicle (1) with a roof (2; 102) which comprises at least two movable units (6, 14; 106, 114), each of them movably supported on main bearings (7, 8; 15, 16; 107, 108; 115) fixed to the vehicle body, and each having at least one rigid roof part (3, 4; 103, 104) assigned to it,
**characterised in that** at least one rigid rear roof part (4; 104) comprising a rear window (5; 105) is connected to a main bearing (15, 16; 115) via an articulated chain (17; 117) comprising several parts, with a part (18; 118) of the articulated chain (17; 117) effecting at least one movement of the rigid roof part (4; 104) with respect to the main bearing (15, 16; 115) and a part (19; 119) of the articulated chain (17; 117) effecting at least one change in the angular position of the rigid roof part (4; 104), so that the rear roof part (4; 104) can be pivoted up (43) at its front edge during the beginning roof opening and, at the same time, a front roof part (3; 103) can be moved to the rear in the sense of nesting the roof parts (34; 103, 104) into each other, the articulated chain (17; 117) consisting of two parts (18, 19; 118, 119) and the movement of the parts (18, 19; 118, 119) being effected by at least one coupling member (35, 37; 135, 137) through the movement of a moving unit (6; 106) for at least one additional rigid roof part (3; 103).

2. The convertible vehicle according to claim 1, **characterised in that** each part (18, 19; 118, 119) of the articulated chain (17; 117) is operatively connected to the moving unit (6; 106) for at least one additional rigid roof part (3; 103) via one of the respective coupling members (35, 37; 135, 137).

3. The convertible vehicle according to any one of claims 1 or 2, **characterised in that** the articulated chain (17) comprises two four-bar linkages connected to each other.

4. The convertible vehicle according to any one of claims 1 to 3, **characterised in that** the articulated chain (17) comprises a seven-bar linkage.

5. The convertible vehicle according to any one of claims 1 to 4, **characterised in that** exactly two moving units (6, 14; 106, 114) are provided, the front unit (6; 106) comprising a linkage parallelogram formed by a four-bar linkage (7, 8, 2, 13; 107, 108, 112, 113), with each vehicle side having two directing arms (9, 10; 109, 110) supported on the vehicle body (11).

6. The convertible vehicle according to claim 5, **characterised in that** the coupling member(s) (35, 37; 135, 137) is/are formed by mechanical levers acting on one or more directing arms (9, 10; 109, 110) of the front moving unit (6; 106).

7. The convertible vehicle according to any one of claims 1 to 6, **characterised in that** each moving unit (6, 14; 106, 114) has exactly one rigid roof part (3, 4; 103, 104) assigned to it.

8. The convertible vehicle according to any one of claims 1 to 7, **characterised in that**, when the roof (2; 102) is in its open position, the rear moving unit (14; 114) holds the rear rigid roof part (4; 104), which comprises the rear window (5; 105), in such a way that the outside of the rear window (5; 105) faces up.

9. The convertible vehicle according to claim 8, **characterised in that**, in the open position, a front roof part (3; 103) is held below the rear rigid roof part (4; 104), said front roof part (3; 103) being oriented in the same direction.

10. A roof (2; 102) for a convertible vehicle (1) according to any one of claims 1 to 9, said roof (2; 102) comprising at least two movable units (6, 14; 106, 114), each of them movably supported on main bearings (7, 8; 15, 16; 107, 108; 115) when installed in the vehicle, said main bearings (7, 8; 15, 16; 107, 108; 115) being fixed to the vehicle body,
**characterised in that** at least one rigid roof part (4; 104), located at the rear when installed and comprising a rear window (5; 105), is connectable to a main bearing (15, 16; 115) via an articulated chain (17; 117) comprising several parts, with a part (18; 118) of the articulated chain (17; 117) effecting at least a movement of the rigid roof part (4; 104) with respect to the main bearing (15, 16; 115) and a part (19; 119) of the articulated chain (17; 117) effecting at least a change in the angular position of the rigid roof part (4; 104) so that the rear roof part (4; 104) can be pivoted up (43) at its front edge during the beginning roof opening and, at the same time, a front roof part (3; 103) can be moved to the rear in the sense of nesting the roof parts (34; 103, 104) into each other, the articulated chain (17; 117) consisting of two parts (18, 19; 118, 119) and the movement of the parts (18, 19; 118, 119) being effected by at least one coupling member (35, 37; 135, 137) by the movement of a moving unit (6; 106) for at least one additional rigid roof part (3; 103).

## Revendications

1. Véhicule cabriolet (1), présentant un toit (2; 102) qui comprend au moins deux unités déplaçables (6, 14; 106, 114), dont chacune est maintenue de manière déplaçable sur des paliers principaux (7, 8; 15, 16; 107, 108; 115) montés fixe à la carrosserie, et un élément de toit rigide (3, 4; 103, 104) étant conjugué à chacune d'entre elles,
**caractérisé en ce qu'**au moins un élément de toit rigide arrière (4; 104) comprenant une lunette arrière (5; 105) est relié à un palier principal (15, 16; 115) au moyen d'une chaîne articulée (17; 117) en plusieurs parties, une partie (18; 118) de la chaîne articulée (17; 117) effectuant au moins un déplacement de l'élément de toit rigide (4; 104) par rapport au palier principal (15, 16; 115) et une partie (19; 119) de la chaîne articulée (17; 117) effectuant au moins une modification de la position angulaire de l'élément de toit rigide (4; 104), de manière à permettre le pivotement vers le haut (43) de l'élément de toit arrière (4; 104) par son bord avant au début de l'ouverture du toit et à permettre, en même temps, le déplacement d'un élément de toit avant (3; 103) vers l'arrière de manière à imbriquer les éléments de toit (34; 103, 104), les uns dans les autres, la chaîne articulée (17; 117) étant en deux parties (18, 19; 118, 119) et le déplacement des parties (18, 19; 118, 119) étant effectué par au moins un élément de couplage (35, 37; 135, 137) au moyen du déplacement d'une unité de déplacement (6; 106) pour au moins un autre élément de toit rigide (3; 103).

2. Véhicule cabriolet selon la revendication 1, **caractérisé en ce que** chaque partie (18, 19; 118, 119) de la chaîne articulée (17; 117) coopère avec l'unité de déplacement (6; 106) pour au moins un autre élément de toit rigide (3; 103) au moyen d'un des éléments de couplage (35, 37; 135, 137).

3. Véhicule cabriolet selon l'une quelconque des revendications 1 ou 2, **caractérisé en ce que** la chaîne articulée (17) comprend deux ensembles à quatre articulations reliés les uns aux autres.

4. Véhicule cabriolet selon l'une quelconque des revendications 1 à 3, **caractérisé en ce que** la chaîne articulée (17) comprend un ensemble à sept articulations.

5. Véhicule cabriolet selon l'une quelconque des revendications 1 à 4, **caractérisé en ce que** l'on prévoit exactement deux unités de déplacement (6, 14; 106, 114), l'unité avant (6; 106) comprenant un parallélogramme articulé constitué d'un ensemble à quatre articulations (7, 8, 2, 13; 107, 108, 112, 113), présentant sur chaque côté du véhicule, deux bielles (9, 10; 109, 110) maintenues sur la carrosserie (11).

6. Véhicule cabriolet selon la revendication 5, **caractérisé en ce que** le ou les élément(s) de couplage (35, 37; 135, 137) est/sont constitués par des leviers mécaniques agissant sur une ou plusieurs bielles (9, 10; 109, 110) de l'unité de déplacement avant (6; 106).

7. Véhicule cabriolet selon l'une quelconque des revendications 1 à 6, **caractérisé en ce qu'**exactement un élément de toit rigide (3, 4; 103, 104) est conjugué à chaque unité de déplacement (6, 14; 106, 114).

8. Véhicule cabriolet selon l'une quelconque des revendications 1 à 7, **caractérisé en ce que**, dans la position ouverte du toit (2; 102), l'unité de déplacement arrière (14; 114) maintient l'élément de toit rigide arrière (4; 104), qui comprend la lunette arrière (5; 105), de manière à ce que la face extérieure de la lunette arrière (5; 105) soit tournée vers le haut.

9. Véhicule cabriolet selon la revendication 8, **caractérisé en ce que**, dans la position ouverte, un élément de toit avant (3; 103) est maintenu au-dessous de l'élément de toit rigide arrière (4; 104), ledit élément de toit avant (3; 103) étant orienté dans la même direction.

10. Toit (2; 102) pour un véhicule cabriolet (1) selon l'une quelconque des revendications 1 à 9, ledit toit (2; 102) comprenant au moins deux unités déplaçables (6, 14; 106, 114), dont chacune, en position installée dans le véhicule, est maintenue de manière déplaçable sur des paliers principaux (7, 8; 15, 16; 107, 108; 115) montés fixe à la carrosserie, **caractérisé en ce qu'**au moins un élément de toit rigide (4; 104), disposé en arrière dans sa position installée et comprenant une lunette arrière (5; 105), peut être relié à un palier principal (15, 16; 115) au moyen d'une chaîne articulée (17; 117) en plusieurs parties, une partie (18; 118) de la chaîne articulée (17; 117) effectuant au moins un déplacement de l'élément de toit rigide (4; 104) par rapport au palier principal (15, 16; 115) et une partie (19; 119) de la chaîne articulée (17; 117) effectuant au moins une modification de la position angulaire de l'élément de toit rigide (4; 104), de manière à permettre le pivotement vers le haut (43) de l'élément de toit arrière (4; 104) par son bord avant au début de l'ouverture du toit et à permettre, en même temps, le déplacement d'un élément de toit avant (3; 103) vers l'arrière de manière à imbriquer les éléments de toit (34; 103, 104), les uns dans les autres, la chaîne articulée (17; 117) étant en deux parties (18, 19; 118, 119) et le déplacement des parties (18, 19; 118, 119) étant effectué par au moins un élément de couplage (35, 37; 135, 137) au moyen du déplacement d'une unité de déplacement (6; 106) pour au moins un autre élément de toit rigide (3; 103).
